# EUROPEAN PATENT APPLICATION

(11) **EP 4 841 909 A1**
(43) Date of publication of application: **18.11.2026**
(21) Application number: 24916119.1
(22) Date of filing: 12.01.2024
(51) Int. Cl.: H04B 7/185

(54) **INFORMATION RECEIVING METHODS AND APPARATUSES, INFORMATION SENDING METHODS AND APPARATUSES, AND TERMINAL, NETWORK DEVICE AND STORAGE MEDIUM**

(71) Applicant: Beijing Xiaomi Mobile Software Co., Ltd., Beijing 100085 (CN)
(72) Inventor: LI, Lisi, Beijing 100085 (CN)
(74) Representative: Stöckeler, Ferdinand
(86) International application number: PCT/CN2024/072171
(87) International publication number: WO 2025/148055

(57) **Abstract**

The present disclosure relates to the technical field of communications, and particularly relates to information receiving methods and apparatuses, information sending methods and apparatuses, and a terminal, a network device and a storage medium. An information receiving method comprises: receiving first information sent by an air network device, wherein the first information is used for indicating information related to storage and forwarding of the air network device. On the basis of the present disclosure, the air network device can indicate to a first terminal the information related to storage and forwarding of the air network device by means of the first information, so that the first terminal can know the information related to storage and forwarding of the air network device in a relatively comprehensive manner, and thus the first terminal can accordingly choose to execute suitable operations, which is conducive to avoiding the technical problems whereby uplink information is abandoned by the air network device, storage and forwarding operations of the air network device cannot meet service requirements of the uplink information, etc., after the first terminal sends the uplink information to the air network device.

## Description

### FIELD

The present disclosure relates to the field of communication technologies, and in particular, to an information receiving method, an information sending method, a terminal, a network device, a communication system and a storage medium.

### BACKGROUND

With the development of communication technologies, communication is no longer limited to communication between terrestrial devices. For example, in a non-terrestrial network (NTN), a terminal may communicate with a terrestrial network device via a satellite in the air.

Since a satellite keeps moving in the air, the states of a link between the satellite and the terminal and a link between the satellite and the terrestrial network device may change, thereby causing some technical issues.

### SUMMARY

Embodiments of the present disclosure provide an information receiving method, an information receiving apparatus, an information sending method, an information sending apparatus, a terminal, a network device and a storage medium, to address the technical issues in related art.

According to a first aspect of embodiments of the present disclosure, an information receiving method is provided, which is performed by a first terminal. The method includes: receiving first information sent by a non-terrestrial network device, in which the first information is used to indicate store-and-forward related information of the non-terrestrial network device.

According to a second aspect of embodiments of the present disclosure, an information sending method is provided, which is performed by a non-terrestrial network device. The method includes: sending first information to a first terminal, in which the first information is used to indicate store-and-forward related information of the non-terrestrial network device.

According to a third aspect of embodiments of the present disclosure, an information sending method is provided, which is performed by a first terminal. The method includes: sending first information to a non-terrestrial network device, in which the first information is used to indicate store-and-forward related information of uplink information that needs to be sent to the non-terrestrial network device.

According to a fourth aspect of embodiments of the present disclosure, an information receiving method is provided, which is performed by a non-terrestrial network device. The method includes: receiving first information sent by a first terminal, in which the first information is used to indicate store-and-forward related information of uplink information that needs to be sent to the non-terrestrial network device.

According to a fifth aspect of embodiments of the present disclosure, an information receiving apparatus is proposed, which is provided in a first terminal. The apparatus includes: a receiving module, configured to receive first information sent by a non-terrestrial network device, in which the first information is used to indicate store-and-forward related information of the non-terrestrial network device.

According to a sixth aspect of embodiments of the present disclosure, an information sending apparatus is proposed, which is provided in a non-terrestrial network device. The apparatus includes: a sending module, configured to send first information to a first terminal, in which the first information is used to indicate store-and-forward related information of the non-terrestrial network device.

According to a seventh aspect of embodiments of the present disclosure, an information sending apparatus is proposed, which is provided in a first terminal. The apparatus includes: a sending module, configured to send first information to a non-terrestrial network device, in which the first information is used to indicate store-and-forward related information of uplink information that needs to be sent to the non-terrestrial network device.

According to an eighth aspect of embodiments of the present disclosure, an information receiving apparatus is proposed, which is provided in a non-terrestrial network device. The apparatus includes: a receiving module, configured to receive first information sent by a first terminal, in which the first information is used to indicate store-and-forward related information of uplink information that needs to be sent to the non-terrestrial network device.

According to a ninth aspect of embodiments of the present disclosure, a terminal is provided, including one or more processors. The terminal is configured to perform the information receiving method as described in the first aspect, and/or the information sending method as described in the third aspect.

According to a tenth aspect of embodiments of the present disclosure, a network device is provided, including one or more processors. The network device is configured to perform the information sending method as described in the second aspect, and/or the information receiving method as described in the fourth aspect.

According to an eleventh aspect of embodiments of the present disclosure, a communication system is provided, including a terminal and a network device. The terminal is configured to implement the information receiving method as described in the first aspect and/or the information sending method as described in the third aspect, and the network device is configured to implement the information sending method as described in the second aspect and/or the information receiving method as described in the fourth aspect.

According to a twelfth aspect of embodiments of the present disclosure, a storage medium is provided. The storage medium has stored thereon instructions, which, when executed on a communication device, cause the communication device to perform: the information receiving method as described in the first aspect, and/or the information sending method as described in the second aspect, the information sending method as described in the third aspect, and/or the information receiving method as described in the fourth aspect.

According to the embodiments of the present disclosure, the non-terrestrial network device may indicate the store-and-forward related information of the non-terrestrial network device to the first terminal through the first information, so that the first terminal may have a relatively comprehensive understanding of the store-and-forward related information of the non-terrestrial network device, and thus can choose to perform an appropriate operation accordingly, which is beneficial to avoid technical issues such as the uplink information being discarded by the non-terrestrial network device or the store-and-forward operation of the non-terrestrial network device being unable to meet service requirements of the uplink information after the first terminal sends the uplink information to the non-terrestrial network device.

The first terminal may indicate, through first information to the non-terrestrial network device, the store-and-forward related information of the uplink information that the first terminal needs to send to the non-terrestrial network device, so that the non-terrestrial network device can obtain a relatively comprehensive understanding of the store-and-forward related content of the uplink information, and thus can choose appropriately whether to admit storing the uplink information sent by the first terminal accordingly, which is beneficial to avoid technical issues such as the uplink information being discarded by the non-terrestrial network device or the store-and-forward operation of the non-terrestrial network device being unable to meet service requirements of the uplink information after the first terminal sends the uplink information to the non-terrestrial network device.

### BRIEF DESCRIPTION OF THE DRAWINGS

In order to illustrate the technical solutions of the embodiments of the present disclosure in a clearer manner, the drawings required for the description of the embodiments of the present disclosure will be described hereinafter briefly. Apparently, the following drawings merely relate to some embodiments of the present disclosure, and based on these drawings, a person of ordinary skill in the art may obtain other drawings without any creative effort.
FIG. 1 is a schematic diagram of a wireless communication system according to an embodiment of the present disclosure.
FIG. 2A is an interactive schematic diagram of an information receiving method according to an embodiment of the present disclosure.
FIG. 2B is an interactive schematic diagram of an information receiving method according to an embodiment of the present disclosure.
FIG. 2C is an interactive schematic diagram of an information sending method according to an embodiment of the present disclosure.
FIG. 2D is an interactive schematic diagram of an information sending method according to an embodiment of the present disclosure.
FIG. 3 is a schematic flow chart of an information receiving method according to an embodiment of the present disclosure.
FIG. 4 is a schematic flow chart of an information sending method according to an embodiment of the present disclosure.
FIG. 5 is a schematic flowchart of an information sending method according to an embodiment of the present disclosure.
FIG. 6 is a schematic flow chart of an information receiving method according to an embodiment of the present disclosure.
FIG. 7 is a schematic block diagram of an information receiving apparatus according to an embodiment of the present disclosure.
FIG. 8 is a schematic block diagram of an information sending apparatus according to an embodiment of the present disclosure.
FIG. 9 is a schematic block diagram of an information sending apparatus according to an embodiment of the present disclosure.
FIG. 10 is a schematic block diagram of an information receiving apparatus according to an embodiment of the present disclosure.
FIG. 11A is a schematic structural diagram of a communication device according to an embodiment of the present disclosure.
FIG. 11B is a schematic structural diagram of a chip according to an embodiment of the present disclosure.

### DETAILED DESCRIPTION

Embodiments of the present disclosure provide an information receiving method, an information receiving apparatus, an information sending method, an information sending apparatus, a terminal, a network device and a storage medium.

In a first aspect, an embodiment of the present disclosure provides an information receiving method, which is performed by a first terminal, and includes: receiving first information sent by a non-terrestrial network device, in which the first information is used to indicate store-and-forward related information of the non-terrestrial network device.

In the above embodiment, the non-terrestrial network device may indicate the store-and-forward related information of the store-and-forward network device to the first terminal through the first information, so that the first terminal may have a relatively comprehensive understanding of the store-and-forward related information of the non-terrestrial network device, and thus can choose to perform an appropriate operation accordingly, which is beneficial to avoid such technical issues as the uplink information being discarded by the non-terrestrial network device after the first terminal sends the uplink information to the non-terrestrial network device, or the store-and-forward operation of the non-terrestrial network device being unable to meet service requirements of the uplink information.

According to some of the aforementioned embodiments of the first aspect, the store-and-forward related information of the non-terrestrial network device includes at least one of: whether the non-terrestrial network device supports store-and-forward; whether a first link between the non-terrestrial network device and a terrestrial network device is available; an available time of a first link; an unavailable time of a first link; a storage space of the non-terrestrial network device; information of a terrestrial network device to which the non-terrestrial network device is capable of being connected; or a delay of performing store-and-forward by the non-terrestrial network device.

According to some of the aforementioned embodiments of the first aspect, the method further includes: determining whether to send uplink information to the non-terrestrial network device according to the store-and-forward related information.

According to some of the aforementioned embodiments of the first aspect, the method further includes: determining to send uplink information to the non-terrestrial network device and the first terminal being in a non-connected state, in which sending the uplink information to the non-terrestrial network device is performed by: sending the uplink information to the non-terrestrial network device through an early data transmission; or establishing, resuming or reestablishing a radio resource control connection with the non-terrestrial network device, and sending the uplink information to the non-terrestrial network device through the radio resource control connection.

According to some of the aforementioned embodiments of the first aspect, the method further includes at least one of: receiving first indication information sent by the non-terrestrial network device, in which the first indication information is used to indicate that the non-terrestrial network device admits storing the uplink information; or receiving second indication information sent by the non-terrestrial network device, in which the second indication information is used to indicate that the non-terrestrial network device does not admit storing the uplink information.

In a second aspect, an embodiment of the present disclosure provides an information sending method, which is performed by a non-terrestrial network device and includes: sending first information to a first terminal, in which the first information is used to indicate store-and-forward related information of the non-terrestrial network device.

According to some of the aforementioned embodiments of the second aspect, the store-and-forward related information of the non-terrestrial network device includes at least one of: whether the non-terrestrial network device supports store-and-forward; whether a first link between the non-terrestrial network device and a terrestrial network device is available; an available time of a first link; an unavailable time of a first link; a storage space of the non-terrestrial network device; information of a terrestrial network device to which the non-terrestrial network device is capable of being connected; or a delay of performing store-and-forward by the non-terrestrial network device.

According to some of the aforementioned embodiments of the second aspect, the first information is used by the first terminal to determine whether to send uplink information to the non-terrestrial network device.

According to some of the aforementioned embodiments of the second aspect, the method further includes at least one of: sending first indication information to the first terminal, wherein the first indication information is used to indicate that the non-terrestrial network device admits storing the uplink information; or sending second indication information to the first terminal, wherein the second indication information is used to indicate that the non-terrestrial network device does not admit storing the uplink information.

According to some of the aforementioned embodiments of the second aspect, the method further includes: determining whether to admit storing the uplink information sent by the first terminal according to at least one of: a cause for the first terminal to send the uplink information to the non-terrestrial network device; a priority of the first terminal; or a priority of the uplink information.

In a third aspect, an embodiment of the present disclosure provides an information sending method, which is performed by a first terminal and includes: sending first information to a non-terrestrial network device, in which the first information is used to indicate store-and-forward related information of uplink information that needs to be sent to the non-terrestrial network device.

In the above embodiment, the first terminal may indicate, through first information to the non-terrestrial network device, the store-and-forward related information of the uplink information that the first terminal needs to send to the non-terrestrial network device, so that the non-terrestrial network device can obtain a relatively comprehensive understanding of the store-and-forward related content of the uplink information, and thus can choose appropriately whether to admit storing the uplink information sent by the first terminal accordingly, which is beneficial to avoid technical issues such as the uplink information being discarded by the non-terrestrial network device or the store-and-forward operation of the non-terrestrial network device being unable to meet service requirements of the uplink information after the first terminal sends the uplink information to the non-terrestrial network device.

According to some of the aforementioned embodiments of the third aspect, the store-and-forward related information of the uplink information includes at least one of: whether the uplink information requires store-and-forward; a storage resource required for the uplink information; or a store-and-forward delay allowed for the uplink information.

According to some of the aforementioned embodiments of the third aspect, the first information is used for the non-terrestrial network device to determine whether to admit storing the uplink information.

According to some of the aforementioned embodiments of the third aspect, the method further includes at least one of: receiving first indication information sent by the non-terrestrial network device, wherein the first indication information is used to indicate that the non-terrestrial network device admits storing the uplink information; or receiving second indication information sent by the non-terrestrial network device, wherein the second indication information is used to indicate that the non-terrestrial network device does not admit storing the uplink information.

According to some of the aforementioned embodiments of the third aspect, the first indication information is further used to indicate a size of the uplink information that the first terminal is allowed to send.

According to some of the aforementioned embodiments of the third aspect, the second indication information is further used to indicate a cause for the uplink information not being allowed to be stored.

According to some of the aforementioned embodiments of the third aspect, the cause comprises at least one of: a limited storage resource in the non-terrestrial network device; or a first link between the non-terrestrial network device and a terrestrial network device being unavailable.

In a fourth aspect, an embodiment of the present disclosure provides an information receiving method, which is performed by a non-terrestrial network device and includes: receiving first information sent by a first terminal, in which the first information is used to indicate store-and-forward related information of uplink information that needs to be sent to the non-terrestrial network device.

According to some of the aforementioned embodiments of the fourth aspect, the store-and-forward related information of the uplink information includes at least one of: whether the uplink information requires store-and-forward; a storage resource required for the uplink information; or a store-and-forward delay allowed for the uplink information.

According to some of the aforementioned embodiments of the fourth aspect, the method further includes: determining whether to admit storing the uplink information according to the first information.

According to some of the aforementioned embodiments of the fourth aspect, the method further includes at least one of: sending first indication information to the first terminal, wherein the first indication information is used to indicate that the non-terrestrial network device admits storing the uplink information; or sending second indication information to the first terminal, wherein the second indication information is used to indicate that the non-terrestrial network device does not admit storing the uplink information.

According to some of the aforementioned embodiments of the fourth aspect, the first indication information is further used to indicate a size of the uplink information that the first terminal is allowed to send.

According to some of the aforementioned embodiments of the fourth aspect, the second indication information is further used to indicate a cause for the uplink information not being allowed to be stored.

According to some of the aforementioned embodiments of the fourth aspect, the cause comprises at least one of: a limited storage resource in the non-terrestrial network device; or a first link between the non-terrestrial network device and a terrestrial network device being unavailable.

In a fifth aspect, an embodiment of the present disclosure provides an information receiving apparatus, which is provided in a first terminal and includes: a receiving module, configured to receive first information sent by a non-terrestrial network device, in which the first information is used to indicate store-and-forward related information of the non-terrestrial network device.

In a sixth aspect, an embodiment of the present disclosure provides an information sending apparatus is proposed, which is provided in a non-terrestrial network device and includes: a sending module, configured to send first information to a first terminal, in which the first information is used to indicate store-and-forward related information of the non-terrestrial network device.

In a seventh aspect, an embodiment of the present disclosure provides an information sending apparatus is proposed, which is provided in a first terminal and includes: a sending module, configured to send first information to a non-terrestrial network device, in which the first information is used to indicate store-and-forward related information of uplink information that needs to be sent to the non-terrestrial network device.

In an eighth aspect, an embodiment of the present disclosure provides an information receiving apparatus is proposed, which is provided in a non-terrestrial network device and includes: a receiving module, configured to receive first information sent by a first terminal, in which the first information is used to indicate store-and-forward related information of uplink information that needs to be sent to the non-terrestrial network device.

In a ninth aspect, an embodiment of the present disclosure provides a terminal is provided, including one or more processors. The terminal is configured to perform the information receiving method as described in the first aspect and any one of optional embodiments of the first aspect, and/or the information sending method as described in the third aspect and any one of optional embodiments of the third aspect.

In a tenth aspect, an embodiment of the present disclosure provides a network device, including one or more processors. The network device is configured to perform the information sending method as described in any one of the second aspect or optional embodiments of the second aspect, and/or the information receiving method as described in the fourth aspect and any one of optional embodiments of the fourth aspect.

In an eleventh aspect, an embodiment of the present disclosure provides a communication system, including a terminal and a network device. The terminal is configured to implement the information receiving method as described in the first aspect and any one of optional embodiments of the first aspect, and/or the information sending method as described in the third aspect and any one of optional embodiments of the third aspect, and the network device is configured to implement the information sending method as described in the second aspect and any one of optional embodiments of the second aspect, and/or the information receiving method as described in the fourth aspect and any one of optional embodiments of the fourth aspect.

In a twelfth aspect, an embodiment of the present disclosure provides a storage medium. The storage medium has stored thereon instructions, which, when executed on a communication device, cause the communication device to perform: the information receiving method as described in the first aspect and any one of optional embodiments of the first aspect, and/or the information sending method as described in the second aspect and any one of optional embodiments of the second aspect, the information sending method as described in the third aspect and any one of optional embodiments of the third aspect, and/or the information receiving method as described in the fourth aspect and any one of optional embodiments of the fourth aspect.

In a thirteenth aspect, an embodiment of the present disclosure provides a program product. When the program product is executed by a communication device, the communication device performs the information receiving method as described in the first aspect and any one of optional embodiments of the first aspect, and/or the information sending method as described in the third aspect and any one of optional embodiments of the third aspect, and/or the information sending method as described in the second aspect and any one of the optional embodiments of the second aspect, and/or the information receiving method as described in the fourth aspect and any one of the optional embodiments of the fourth aspect.

In the fourteenth aspect, an embodiment of the present disclosure provides a computer program, which, when running on a computer, causes the computer to execute the information receiving method described in the first aspect and any one of optional embodiments of the first aspect, and/or the information sending method described in the third aspect and any one of optional embodiments of the third aspect, and/or the information sending method described in the second aspect and any one of optional embodiments of the second aspect, and/or the information receiving method described in the fourth aspect and any one of the optional embodiments of the fourth aspect.

As can be appreciated, the information receiving apparatus, the information sending apparatus, the terminal, the network device, the communication system, the storage medium, the program product, and the computer program are all used to execute the methods in the embodiments of the present disclosure. Therefore, the beneficial effects that can be achieved may refer to the beneficial effects in the corresponding methods, and thus the description thereof is omitted herein.

Embodiments of the present disclosure provide an information receiving method, an information receiving apparatus, an information sending method, an information sending apparatus, a terminal, a network device and a storage medium. In some embodiments, terms such as information receiving method, information sending method and information processing method, communication method may be used interchangeably; terms such as information receiving apparatus, information sending apparatus and information processing apparatus, communication apparatus may be used interchangeably; and terms such as information processing system and communication system may be used interchangeably.

The embodiments of the present disclosure are not exhaustive, but are merely illustrative of some embodiments, and are not intended to be a specific limitation on the scope of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of the steps in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In various embodiments of the present disclosure, unless otherwise specified and in case of logical conflicts, the terms and/or descriptions among the embodiments are consistent and may be referenced to each other, and technical features in different embodiments may be combined to form new embodiments according to their intrinsic logical relationships.

The terms used in the embodiments of the present disclosure are for the purpose of describing specific embodiments only, and are not intended to limit the present disclosure.

In the embodiments of the present disclosure, unless otherwise specified, elements represented in the singular form, such as "a", "an", "the", "above", "said", "preceding", "this", and the like, may represent "one and only one", or may represent "one or more", "at least one", and the like.

For example, in a case where an article such as "a", "an", and "the", in English is used in translation, a noun after the article may be understood as a singular expression or a plural expression.

In the embodiments of the present disclosure, "a plurality of" refers to two or more.

In some embodiments, terms such as "at least one of", "one or more", "a plurality of", "multiple", may be used interchangeably.

In some embodiments of the present disclosure, expressions such as "at least one of A or B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments of the present disclosure, expressions such as "A or B" may include the following technical solutions depending on the situation: in some embodiments A (A is executed regardless of B); in some embodiments B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not impose limitations on the position, order, priority, quantity, content, etc. of the described objects. For the description of the described objects, please refer to the description of the context in the claims or the embodiments, and should not constitute unnecessary restrictions due to the use of the prefix words.

For example, if the described object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the described object is "level", the ordinal number before "level" in "first level" and "second level" does not limit the priority between "level". For another example, the number of described objects is not limited by ordinal numbers, and may be one or more. Taking "first device" as an example, the number of "devices" may be one or more. Furthermore, objects modified by different prefixes may be the same or different, for example, if the described object is the "device", the "first device" and the "second device" may be the same device or different devices, and the types thereof may be the same or different. For another example, when the described object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to ...", "in response to determining ...", "in a case where ...", "when ...", "upon ...", "if ..." may be used interchangeably.

In some embodiments, terms such as "greater than", "greater than or equal to", "not smaller than", "more than", "more than or equal to", "not lower than", "higher", "higher than or equal to", "not less than", "above" and the like may be used interchangeably, and terms such as "smaller than", "smaller than or equal to", "not greater than", "less than", "less than or equal to", "not more than", "lower than", "lower than or equal to", "not higher than", "below" and the like may be used interchangeably.

In some embodiments, the apparatus and the device may be interpreted as physical or virtual, and the names thereof are not limited to those described in embodiments, and may also be understood as "apparatus", "equipment", "device", "circuit", "network element", "node", "function", "unit", "section", "system", "network", "chip", "chip system", "entity", "body" and the like in some cases.

In some embodiments, the "network" may be interpreted as an apparatus included in the network, for example, an access network device, a core network device and the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, embodiments of the present disclosure may also be applied to structures where communication between an access network device, a core network device, or a network device and a terminal is replaced by communication between multiple terminals (e.g., device-to-device (D2D), vehicle-to-everything (V2X), etc.). In this case, the terminal may also have all or part of the functions of the access network device. In addition, terms such as "uplink", "downlink" and the like may also be replaced by terms corresponding to inter-terminal communication (e.g., "side"). For example, terms such as uplink channel, downlink channel and the like may be replaced by sidelink channel; terms such as uplink, downlink and the like may be replaced by sidelink.

In some embodiments, a terminal may be replaced by an access network device, a core network device, or a network device. In this case, the access network device, core network device, or network device may also have all or part of the functions of the terminal.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

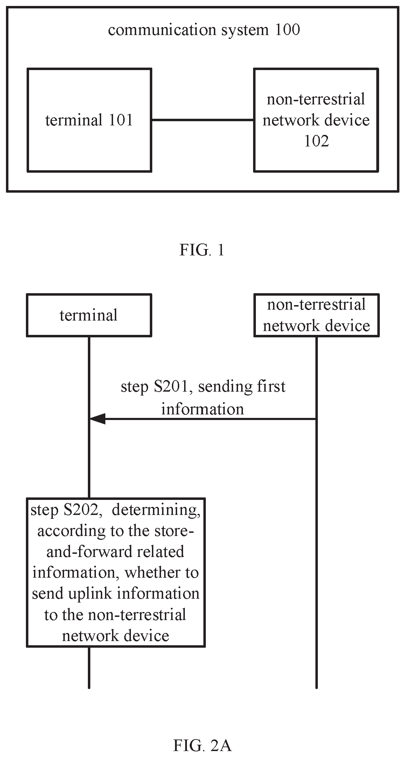

FIG. 1 is a schematic diagram of a wireless communication system according to an embodiment of the present disclosure.

As shown in FIG. 1, a communication system 100 includes a terminal 101 and a non-terrestrial network device 102, in which the non-terrestrial network device may communicate with a terrestrial network device.

In some embodiments, the non-terrestrial network device includes at least one of: a satellite, an airborne platform, or a drone.

In some embodiments, the terrestrial network device includes at least one of: an access network device, or a core network device.

In some embodiments, the terminal 101 includes, for example, at least one of, but is not limited to: a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments, the access network device is, for example, a node or device that accesses a terminal to a wireless network, and the access network device may include at least one of, but is not limited to: an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system.

In some embodiments, the core network device may be one device including one or more network elements, or may be a plurality of devices or a group of devices including all or part the aforementioned one or more network elements respectively. The network element may be virtual or physical. The core network includes, for example, at least one of an evolved packet core (EPC), a 5G core network (5GCN), and a next generation core (NGC).

In some embodiments, the technical solutions of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but not limited thereto.

As can be appreciated, the communication system described in embodiments of the present disclosure is to more clearly explain the technical solution of embodiments of the present disclosure, and does not constitute a limitation on the technical solution provided by the embodiments of the present disclosure. As those skilled in the art know, with the evolution of the system architecture and the emergence of new business scenarios, the technical solutions provided by the embodiments of the present disclosure are applicable to similar technical problems.

The following embodiments of the present disclosure may be applied to the communication system 100 illustrated in FIG. 1 or a part of the entities, but are not limited thereto. The entities shown in FIG. 1 are illustrative, and the communication system may include all or part of the entities shown in FIG. 1, and may also include other entities other than those shown in FIG. 1. The number and form of the entities are arbitrary, each entity may be physical or virtual, the connection relationship between the entities is an example, the entities may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In some embodiments, the terminal may perform communication in a non-terrestrial network (NTN). For example, the terminal may communicate with a terrestrial network device through a non-terrestrial network device in the non-terrestrial network.

For example, the non-terrestrial network device may be a satellite, an airborne platform, or a drone. The non-terrestrial network device may serve as a relay device, a base station, a core network, a gateway, or a mobility management entity (MME).

For example, the terrestrial network device may include at least one of: a base station, a core network, a gateway, or a mobility management entity.

For example, the base station may include at least one of: eNB or gNB.

For example, the core network may include at least one of: a 4G core network or a 5G core network.

For example, the gateway may include at least one of: a serving gateway (S-GW), a packet data network (PDN) gateway (P-GW).

For example, MME may be a core network, or a network element (or referred to as a function) in the core network, such as an access and mobility management function (AMF), a session management function (SMF), a user plane function (UPF). The above-mentioned S-GW may also be referred to as the UPF.

Since the non-terrestrial network device moves in the air, a distance between the non-terrestrial network device and the terrestrial network device may change (for example, in the case of a non-geostationary orbit satellite), or due to link failure, a first link between the non-terrestrial network device and the terrestrial network device (which may be referred to as a feeder link, for example) is generally unable to maintain a continuous connection during the communication process and may be disconnected in some time periods.

Similarly, a distance between the non-terrestrial network device and the terminal may also change, and thus a second link between the non-terrestrial network device and the terminal (which may be referred to as a service link, for example) is generally unable to maintain a continuous connection during the communication process and may be disconnected in some time periods.

The link being disconnected may also be referred to as the link being unavailable, and the link not being disconnected may also be referred to as the link being available.

In some embodiments, considering that the first link and the second link may be disconnected during terminal communication, the non-terrestrial network device may communicate based on a store-and-forward mode.

For example, the first link is available, and the non-terrestrial network device receives information #1 that needs to be sent to the terminal from the terrestrial network device. In a case where the second link is also available, the non-terrestrial network device may choose not to store the information #1 and directly send the information #1 to the terminal. In a case where the second link is unavailable, the non-terrestrial network device may choose to store the information #1, and send the information #1 to the terminal when the second link becomes available subsequently.

For example, the second link is available, and the non-terrestrial network device receives information #2 that needs to be sent to the terrestrial network device from the terminal. In a case where the first link is also available, the non-terrestrial network device may choose not to store the information #2 and directly send the information #2 to the terrestrial network device. In a case where the first link is unavailable, the non-terrestrial network device may choose to store the information #2, and send the information #2 to the terrestrial network device when the first link becomes available subsequently.

It is evident that when the non-terrestrial network device communicates based on the store-and-forward mode, even if communication links (for example, the first link and/or the second link) are disconnected, the non-terrestrial network device can store information and, when the links become available subsequently, forward the stored information to a target device, thereby facilitating ensuring that the terminal can successfully complete communication in the non-terrestrial network.

However, different non-terrestrial network devices may have different capabilities and states, which may lead to differences in store-and-forward related information of the non-terrestrial network devices. For example, some non-terrestrial network devices support store-and-forward, while others do not support store-and-forward. For example, some non-terrestrial network devices have relatively large storage space, while others have relatively small storage space. For example, some non-terrestrial network devices have a relatively large delay of performing store-and-forward, while others have a relatively small delay of performing store-and-forward.

Such store-and-forward related information may affect the store-and-forward process. In a case where the terminal sends uplink information that requires store-and-forward to the non-terrestrial network device without knowing the store-and-forward related information of the non-terrestrial network device, it may cause technical issues such as the uplink information being discarded by the non-terrestrial network device, or the store-and-forward operation of the non-terrestrial network device being unable to meet service requirements of the uplink information.

In some embodiments, for information from the terminal and the terrestrial network device, modes in which the non-terrestrial network device processes information may include at least one of: a transparent mode and a regeneration mode.

In the transparent mode, the terrestrial network device may send information to the non-terrestrial network device, and the non-terrestrial network device, after converting the information to a frequency band of the non-terrestrial network device, sends the information to the terminal through the frequency band of the non-terrestrial network device. In some embodiments, signal amplification operation is also performed on the information, and the non-terrestrial network device does not demodulate the information except for frequency band conversion and signal amplification operations. In this case, the non-terrestrial network device may be regarded as a repeater.

In the regeneration mode, the terrestrial network device may send information to the non-terrestrial network device, and the non-terrestrial network device may demodulate and decode the information, and re-encode and modulate the information (regeneration mainly refers to this process), and send the encoded and modulated information to the terminal. In this mode, the non-terrestrial network device may also perform such operations as frequency band conversion and signal amplification. In this case, the non-terrestrial network device may be regarded as an access network device, such as a base station.

In some embodiments, the non-terrestrial network device may perform operations described in the embodiments of the present disclosure in the regeneration mode; or, in some embodiments, the non-terrestrial network device may perform operations described in the embodiments of the present disclosure in the transparent mode. The non-terrestrial network device in the regeneration mode may serve as a base station, a core network, a gateway, an MME, or the like.

FIG. 2A is an interactive schematic diagram of an information receiving method according to an embodiment of the present disclosure.

As shown in FIG. 2A, the information receiving method may include the following steps S201 and S202.

In step S201, a non-terrestrial network device sends first information to a first terminal.

In some embodiments, the first information is used to indicate store-and-forward related information of the non-terrestrial network device.

In some embodiments, the first terminal receives the first information sent by the non-terrestrial network device.

In some embodiments, the first terminal determines, according to the first information, the store-and-forward related information of the non-terrestrial network device.

In some embodiments, the first information may be, but not limited to, broadcast information, such as system information (SI), or paging, or may be groupcast information or multicast information, but is not limited thereto.

According to the embodiments of the present disclosure, the non-terrestrial network device may indicate the store-and-forward related information of the non-terrestrial network device to the first terminal through the first information, so that the first terminal may have a relatively comprehensive understanding of the store-and-forward related information of the non-terrestrial network device, and thus can choose to perform an appropriate operation accordingly, which is beneficial to avoid technical issues such as the uplink information being discarded by the non-terrestrial network device or the store-and-forward operation of the non-terrestrial network device being unable to meet service requirements of the uplink information after the first terminal sends the uplink information to the non-terrestrial network device.

In some embodiments, the store-and-forward related information of the non-terrestrial network device includes at least one of:
whether the non-terrestrial network device supports store-and-forward;
whether a first link between the non-terrestrial network device and a terrestrial network device is available;
an available time of the first link;
an unavailable time of the first link;
a storage space of the non-terrestrial network device;
information of a terrestrial network device to which the non-terrestrial network device is capable of being connected, which may include, for example, an identifier of the terrestrial network device; taking the case where the terrestrial network device includes an MME as an example, the information of the terrestrial network device may be an identifier of the MME or an identifier of an MME group; or
a delay of performing store-and-forward by the non-terrestrial network device.

It should be noted that the store-and-forward related information of the non-terrestrial network device is not limited to the above items, which is not particularly defined in the present disclosure.

In step S202, the first terminal may determine, according to the store-and-forward related information, whether to send uplink information to the non-terrestrial network device.

In some embodiments, the first terminal may be an Internet of Things (IoT) device, such as a narrow band internet of things (NB-IoT) device, or may be a legacy device.

In some embodiments, the uplink information may include data or may include signaling, which will not be particularly defined herein. The data may be normal uplink data or may be mobile originated (MO) uplink data of the first terminal. For example, the first terminal is an IoT device, and the uplink information may include IoT data.

In some embodiments, the non-terrestrial network device may implement functions of a base station, and the terrestrial network device may implement functions of a core network device.

In other embodiments, the non-terrestrial network device may implement functions of a base station and part of functions of a core network device, and the terrestrial network device may implement part of functions of a core network device.

For example, the first terminal determines that the non-terrestrial network device does not support store-and-forward, the first terminal may not send the uplink information to the non-terrestrial network device, thereby avoiding unnecessary signaling overhead and connection request failure, and saving power of the terminal. In a case where the first terminal determines that the non-terrestrial network device supports store-and-forward, the first terminal sends the uplink information to the non-terrestrial network device.

For example, the first link is unavailable, and the first terminal may not send the uplink information to the non-terrestrial network device, thereby avoiding unnecessary signaling overhead and connection request failure, and saving power of the terminal. In a case where the first link is available, the first terminal may send the uplink information to the non-terrestrial network device.

For example, the first link is unavailable and the storage space of the non-terrestrial network device is smaller than a storage space required for the uplink information, the first terminal may not send the uplink information to the non-terrestrial network device, thereby avoiding unnecessary signaling overhead and connection request failure, and saving power of the terminal. In a case where the first link is unavailable and the storage space of the non-terrestrial network device is greater than or equal to the storage space required for the uplink information, the first terminal may send the uplink information to the non-terrestrial network device.

For example, the first link is unavailable and an interval from the available time of the first link to the current time (that is, the unavailable time of the first link) is greater than a delay allowed for a service of the uplink information, the first terminal may not send the uplink information to the non-terrestrial network device, thereby avoiding unnecessary signaling overhead and connection request failure, and saving power of the terminal. In a case where the first link is unavailable and the interval from the available time of the first link to the current time (that is, the unavailable time of the first link) is less than or equal to the delay allowed for the service of the uplink information, the first terminal may send the uplink information to the non-terrestrial network device.

For example, the terrestrial network device to which the non-terrestrial network device is capable of being connected includes a network device to which the uplink information needs to be sent, the first terminal may send the uplink information to the non-terrestrial network device. In a case where the terrestrial network device to which the non-terrestrial network device is capable of being connected does not include the network device to which the uplink information needs to be sent, the first terminal may not send the uplink information to the non-terrestrial network device, thereby avoiding unnecessary signaling overhead and connection request failure, and saving power of the terminal.

For example, a delay of performing store-and-forward by the non-terrestrial network device is greater than a delay allowed for a service of the uplink information, the first terminal may not send the uplink information to the non-terrestrial network device, thereby avoiding unnecessary signaling overhead and connection request failure, and saving power of the terminal. In a case where the delay of performing store-and-forward by the non-terrestrial network device is less than or equal to the delay allowed for the service of the uplink information, the first terminal may send the uplink information to the non-terrestrial network device.

It should be noted that the first terminal determining, according to the store-and-forward related information of the non-terrestrial network device, whether to send the uplink information to the non-terrestrial network device is not limited to the above embodiments, and the first terminal may also determine, in other manners based on the store-and-forward related information, whether to send the uplink information to the non-terrestrial network device.

In some embodiments, in a case where the first terminal determines to send uplink information to the non-terrestrial network device, and the first terminal is in a non-connected state (for example, an idle state or an inactive state), the first terminal may send the uplink information to the non-terrestrial network device in one of the following manners:
sending the uplink information to the non-terrestrial network device through an early data transmission; and
establishing, resuming or reestablishing a radio resource control (RRC) connection with the non-terrestrial network device, and sending the uplink information to the non-terrestrial network device through the RRC connection.

In some embodiments, in a case where the first terminal is in the non-connected state, and the first terminal determines to send the uplink information to the non-terrestrial network device, the first terminal may send the uplink information to the non-terrestrial network device through an early data transmission.

The early data transmission means that the first terminal may perform data transmission during a connection establishment procedure. For example, the first terminal establishes a connection through random access, the first terminal may carry uplink data in a random access message (for example, a message 3 (Msg3) in a 4-step random access, or a message A (MsgA) in a 2-step random access) and send the uplink data to the non-terrestrial network device.

In some embodiments, in a case where the first terminal is in the non-connected state, and the first terminal determines to send the uplink information to the non-terrestrial network device, the first terminal may establish, resume or reestablish an RRC connection with the non-terrestrial network device, and send the uplink information to the non-terrestrial network device through the RRC connection.

In some embodiments, in a case where the first terminal is in a connected state, and the first terminal determines to send the uplink information to the non-terrestrial network device, the first terminal may directly send the uplink information to the non-terrestrial network device through an RRC connection.

In some embodiments, the first terminal may send the uplink information to the non-terrestrial network device through a control plane (CP). For example, the first terminal may carry the uplink information in an uplink non-access stratum protocol data unit (UL NAS PDU) and send it to the non-terrestrial network device.

In some embodiments, the first terminal may send the uplink information to the non-terrestrial network device through a user plane (UP). For example, the first terminal may carry the uplink information in an uplink user plane (UL UP) bearer and send it to the non-terrestrial network device.

For example, the UL UP bearer may include at least one of the following: a PDU session, a quality of service (QoS) flow, an evolved radio access bearer (E-RAB), or an evolved packet system (EPS) bearer.

In some embodiments, after receiving the uplink information sent by the first terminal, in a case where the first link between the non-terrestrial network device and the terrestrial network device is valid, the non-terrestrial network device may forward the uplink information to the terrestrial network device through the first link.

In a case where the first link between the non-terrestrial network device and the terrestrial network device is invalid, for example, the first link is disconnected, the non-terrestrial network device may choose to store the uplink information sent by the first terminal, or may choose not to store the uplink information sent by the first terminal.

For example, the non-terrestrial network device chooses to store the uplink information sent by the first terminal, the non-terrestrial network device may send first indication information to the first terminal, in which the first indication information is used to indicate that the non-terrestrial network device admits storing the uplink information. In this case, the terminal may determine, according to the first indication information, that the non-terrestrial network device is capable of storing the uplink information, and thus does not need to resend the uplink information.

For example, the non-terrestrial network device chooses not to store the uplink information sent by the first terminal, the non-terrestrial network device may send second indication information to the first terminal, in which the second indication information is used to indicate that the non-terrestrial network device does not admit storing the uplink information. In this case, the terminal may determine, according to the first indication information, that the non-terrestrial network device does not store the uplink information, and thus may choose to resend the uplink information as needed (or, the terminal may choose not to resend the uplink information).

It should be noted that the first indication information and the second indication information in the above embodiments may be included in an RRC message, or may be included in other information, such as downlink control information (DCI), a medium access control control element (MAC CE), but not limited thereto.

In some embodiments, the non-terrestrial network device may determine whether to admit storing the uplink information sent by the first terminal according to at least one of:
a cause for the first terminal to send the uplink information to the non-terrestrial network device;
a priority of the first terminal, which may be determined, for example, according to an identifier of the terminal, a type of the terminal;
a priority of the uplink information, which may be determined, for example, according to a type of the uplink information, a service of the uplink information; or
a size of the uplink information.

In some embodiments, in a case where the non-terrestrial network device receives the uplink information sent by the first terminal, it may also receive uplink information sent by other terminals.

In some embodiments, when the non-terrestrial network device receives only the uplink information sent by the first terminal, the non-terrestrial network device only needs to determine whether to admit storing the uplink information sent by the first terminal according to at least one of the following: a cause for the first terminal to send the uplink information to the non-terrestrial network device, a priority of the first terminal, a priority of the uplink information sent by the first terminal, or a size of the uplink information sent by the first terminal.

A case where the non-terrestrial network device determines whether to admit storing the uplink information sent by the first terminal according to the cause for the first terminal to send the uplink information to the non-terrestrial network device is taken as an example. The cause may be determined according to an indication of the terminal, or may be determined according to the type or the service of the uplink information. For example, the cause is a predefined cause (which may be determined based on a protocol agreement, or negotiated with the terminal, or determined according to an indication of the terrestrial network device), the non-terrestrial network device may admit storing the uplink information sent by the first terminal. In a case where the cause is not the predefined cause, the non-terrestrial network device may not admit storing the uplink information sent by the first terminal.

A case where the non-terrestrial network device determines whether to admit storing the uplink information sent by the first terminal according to the size of the uplink information is taken as an example. In a case where the size of the uplink information is less than or equal to a storage space threshold (which may be determined based on a protocol agreement, or negotiated with the terminal, or determined according to an indication of the terrestrial network device, or determined according to the storage space of the non-terrestrial network device), the non-terrestrial network device may admit storing the uplink information sent by the first terminal. In a case where the size of the uplink information is greater than the storage space threshold, the non-terrestrial network device may not admit storing the uplink information sent by the first terminal.

In some embodiments, in a case where the non-terrestrial network device receives uplink information sent by a plurality of terminals (including the first terminal), the non-terrestrial network device needs to determine whether to admit storing the uplink information sent by the first terminal according to at least one of: a cause for each terminal to send the uplink information to the non-terrestrial network device, a priority of each terminal, a priority of the uplink information sent by each terminal, or a size of the uplink information sent by each terminal.

A case where the non-terrestrial network device determines whether to admit storing the uplink information sent by the first terminal according to the priority of the uplink information sent by each terminal is taken as an example. The non-terrestrial network device may determine a priority order of the plurality of terminals from high to low (for example, a priority relationship of the plurality of terminals may be based on a protocol agreement, or determined according to an indication of the terrestrial network device), and may admit storing only uplink information of the first n (for example, a value determined based on a protocol agreement, or a value determined according to an indication of the terrestrial network device) terminals. In a case where the first terminal belongs to the first n terminals, the storage of the uplink information sent by the first terminal may be allowed, otherwise, the storage of the uplink information sent by the first terminal is not allowed.

A case where the non-terrestrial network device determines whether to admit storing the uplink information sent by the first terminal according to the size of the uplink information sent by each terminal is taken as an example. The non-terrestrial network device may determine a size order of the uplink information of the plurality of terminals, and may admit storing only uplink information of the first m (for example, a value determined based on a protocol agreement, or a value determined according to an indication of the terrestrial network device) terminals. In a case where the first terminal belongs to the first m terminals, the storage of the uplink information sent by the first terminal may be allowed, otherwise, the storage of the uplink information sent by the first terminal is not allowed.

The non-terrestrial network device may also determine whether to admit storing the uplink information sent by the first terminal based on multiple types of information. For example, the non-terrestrial network device may first determine whether a sum of the sizes of the uplink information sent by multiple terminals is greater than the storage space of the non-terrestrial network device. In a case where the sum of the sizes of the uplink information sent by the multiple terminals is greater than the storage space of the non-terrestrial network device, the non-terrestrial network device further determines whether to admit storing the uplink information sent by the first terminal according to the priority of the uplink information sent by each terminal, or according to the size of the uplink information sent by each terminal. In a case where the sum of the sizes of the uplink information sent by the multiple terminals is less than or equal to the storage space of the non-terrestrial network device, the non-terrestrial network device may determine to admit storing the uplink information sent by each terminal, without further determination.

It should be noted that the non-terrestrial network device is not limited to determining whether to admit storing the uplink information sent by the first terminal based on the cause, priority, size, etc. in the above embodiments, and may also determine whether to admit storing the uplink information sent by the first terminal based on other information (for example, a time when the uplink information is received), which is not particularly defined in the embodiments of the present disclosure.

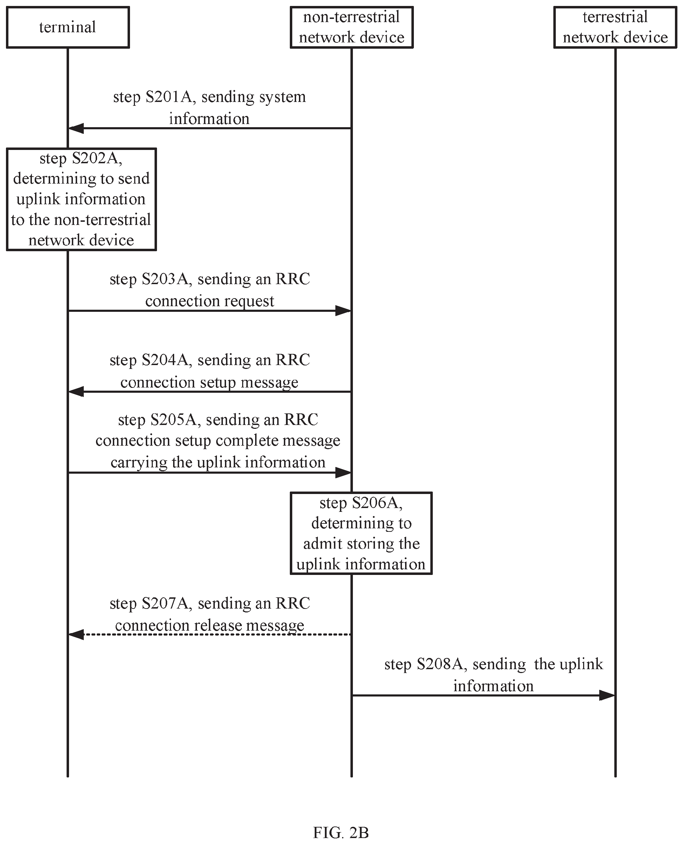

FIG. 2B is an interactive schematic diagram of an information receiving method according to an embodiment of the present disclosure.

As shown in FIG. 2B, a case where a terminal is in a non-connected state is taken as an example.

In step S201A, a non-terrestrial network device sends first information, such as system information, to the first terminal, in which the system information is used to indicate store-and-forward related information of the non-terrestrial network device.

The store-and-forward related information of the non-terrestrial network device includes at least one of:
store-and-forward support capability information, used to indicate whether the non-terrestrial network device supports store-and-forward;
a feeder link (i.e., a first link) availability indication, used to indicate whether a current feeder link is available;
a feeder link unavailable time, used to indicate a time during which the feeder link is unavailable;
a feeder link available time, used to indicate a time during which the feeder link is available;
a size of the available storage space, used to indicate a size of available storage space in the non-terrestrial network device;
identification information of a connectable terrestrial network device, in which an identifier of a terrestrial network device is used to indicate the terrestrial network device to which the non-terrestrial network device is capable of being connected; for example, the identifier of the terrestrial network device may be an MME group ID or an MME ID, but is not limited thereto; or
a possible delay of performing storage, used to indicate a delay of performing store-and-forward by the non-terrestrial network device.

In step S202A, the first terminal determines, according to the store-and-forward related information in the received first information, to send uplink information to the non-terrestrial network device. The uplink information may be normal UL data or MO data.

The first terminal may be in a non-connected state or in a connected state. In a case where the first terminal is in the connected state, the first terminal may directly send the uplink information to the non-terrestrial network device. In a case where the first terminal is in the non-connected state, the first terminal may first establish or resume an RRC connection, and send the uplink information to the non-terrestrial network device through the RRC connection.

For example, the first terminal may send the uplink information to the non-terrestrial network device through a user plane or through a control plane, which is not particularly defined in the present disclosure.

For example, the uplink information may be included in a UL NAS PDU and/or a UL UP bearer.

For example, the terminal may be an NB-IoT device or an IoT device, but is not limited thereto.

An RRC connection establishment procedure is exemplarily described below with reference to steps S203A, S204A and S205A.

In step S203A, the first terminal sends an RRC connection request to the non-terrestrial network device.

In step S204A, the non-terrestrial network device sends an RRC connection setup (RRCConnectionSetup) message to the first terminal.

In step S205A, the first terminal sends an RRC connection setup complete (RRCConnectionSetupComplete) message to the non-terrestrial network device. For example, the RRC connection setup complete message may carry the uplink information, and for example, the uplink information may be carried in a UL NAS PDU.

In step S206A, after receiving the first information, the non-terrestrial network device may determine to admit storing the uplink information.

For example, the non-terrestrial network device may determine, according to a size of the uplink information, whether to perform a store-and-forward operation on the uplink information.

For example, the non-terrestrial network device receives uplink information sent by multiple terminals, the non-terrestrial network device may determine, according to a cause for a terminal among the multiple terminals to request establishment of the RRC connection, and/or a priority of the uplink information, and/or a priority of the terminal, for which terminal's sent uplink information is to be subjected to the store-and-forward operation.

Optionally, in step S207A, the non-terrestrial network device admits storing the uplink information sent by the terminal, and the non-terrestrial network device may send first indication information to the terminal, in which the first indication information is used to indicate that the non-terrestrial network device admits storing the uplink information.

In a case where the non-terrestrial network device admits storing the uplink information sent by the terminal, the non-terrestrial network device may send second indication information to the terminal, in which the second indication information is used to indicate that the non-terrestrial network device does not admit storing the uplink information.

The terminal may determine, according to whether received indication information is the first indication information or the second indication information, whether to resend the uplink information to the non-terrestrial network device.

For example, the first indication information and/or the second indication information may be carried in an RRC message, such as an RRC connection release message.

In a case where the non-terrestrial network device needs to release the RRC connection with the first terminal (for example, because the non-terrestrial network device moves in the air, resulting in poor signal quality between the non-terrestrial network device and the first terminal), the non-terrestrial network device may send an RRC connection release (RRCConnectionRelease) message to the first terminal, and carry the first indication information in the RRC connection release message, to indicate that the non-terrestrial network device admits storing the uplink information.

As can be appreciated, in a case where the first terminal is in the connected state, the first indication information may be carried in the DL NAS PDU, and the DL NAS PDU may be carried in a DL information transfer (DLInformationTransfer) signaling.

In step S208A, the first link is available, and the non-terrestrial network device may forward the uplink information to the terrestrial network device through the first link.

The communication method in the embodiments of the present disclosure may include at least one of steps S201 or S202. For example, step S201 may be implemented as an independent embodiment, step S202 may be implemented as an independent embodiment, and steps S201 and S202 may be implemented as an independent embodiment, but is not limited thereto.

In some embodiments, steps S201 and S202 may be performed in a reverse order or simultaneously.

In some embodiments, step S201 is optional, and in different embodiments, one or more of these steps may be omitted or replaced.

In some embodiments, step S202 is optional, and in different embodiments, one or more of these steps may be omitted or replaced.

In some embodiments, reference may be made to other optional implementations described before or after the description corresponding to FIG. 2A.

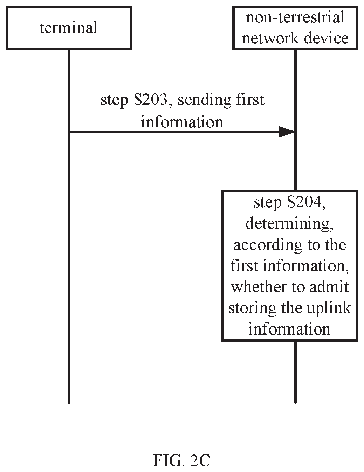

FIG. 2C is a schematic interaction diagram of an information sending method according to an embodiment of the present disclosure.

As shown in FIG. 2C, the information sending method may include the following steps S203 and S204.

In step S203, a first terminal sends first information to a non-terrestrial network device.

In some embodiments, the first information is used to indicate store-and-forward related information of uplink information that the first terminal needs to send to the non-terrestrial network device.

In some embodiments, the non-terrestrial network device receives the first information sent by the first terminal.

In some embodiments, the non-terrestrial network determines, according to the first information, the store-and-forward related information of the uplink information that the first terminal needs to send to the non-terrestrial network device.

In some embodiments, the first information may be carried in an RRC message, for example, carried in an RRC connection request. As can be appreciated, the first information is not limited to being sent to the non-terrestrial network device by being carried in the RRC message, and may also be sent to the non-terrestrial network device in other manners, which will not be particularly defined herein.

According to the embodiments of the present disclosure, the first terminal may indicate, through the first information to the non-terrestrial network device, the store-and-forward related information of the uplink information that the first terminal needs to send to the non-terrestrial network device, so that the non-terrestrial network device can obtain a relatively comprehensive understanding of the store-and-forward related content of the uplink information, and thus can choose appropriately whether to admit storing the uplink information sent by the first terminal accordingly, which is beneficial to avoid technical issues such as the uplink information being discarded by the non-terrestrial network device or the store-and-forward operation of the non-terrestrial network device being unable to meet service requirements of the uplink information after the first terminal sends the uplink information to the non-terrestrial network device.

In some embodiments, before sending the first information to the non-terrestrial network device, the first terminal may first receive second information sent by the non-terrestrial network device, in which the second information is at least used to indicate whether the non-terrestrial network device supports store-and-forward. The first terminal may send the first information to the non-terrestrial network device when it is determined that the non-terrestrial network device supports store-and-forward.

In some embodiments, the first terminal may be an internet of things (IoT) device, such as a narrow band internet of things (NB-IoT) device, or may be a legacy device.

In some embodiments, the uplink information may include data or may include signaling, which will not be particularly defined herein. The data may be normal uplink data or may be mobile originated (MO) uplink data of the first terminal. For example, the first terminal is an IoT device, and the uplink information may include IoT data.

In some embodiments, the store-and-forward related information of the uplink information includes at least one:
whether the uplink information requires store-and-forward;
a storage resource required for the uplink information, which may also be referred to as a size of the uplink information; or
a store-and-forward delay allowed for the uplink information.

It should be noted that the store-and-forward related information of the uplink information is not limited to the above items, and may further include, for example, information of a terrestrial network device to which the uplink information needs to be sent, which is not particularly defined herein.

In step S204, the non-terrestrial network device determines, according to the first information, whether to admit storing the uplink information.

For example, the non-terrestrial network device determines, according to the store-and-forward related information of the uplink information, that the uplink information requires store-and-forward and that the non-terrestrial network device itself also supports store-and-forward, the non-terrestrial network device may determine to admit storing the uplink information, thereby allowing the first terminal to access the non-terrestrial network device. In a case where it is determined that the uplink information requires store-and-forward but the non-terrestrial network device itself does not support store-and-forward, the non-terrestrial network device may determine not to admit storing the uplink information, thereby not allowing the first terminal to access the non-terrestrial network device (for example, by sending an RRC connection reject message or an RRC connection release message, to the first terminal).

For example, the non-terrestrial network device may compare the storage resource required for the uplink information with a storage resource of the non-terrestrial network device. In a case where the storage resource required for the uplink information is less than or equal to the storage resource of the non-terrestrial network device, the non-terrestrial network device may determine to admit storing the uplink information, thereby allowing the first terminal to access the non-terrestrial network device. In a case where the storage resource required for the uplink information is greater than the storage resource of the non-terrestrial network device, the non-terrestrial network device may determine not to admit storing the uplink information, thereby not allowing the first terminal to access the non-terrestrial network device.

For example, the non-terrestrial network device may compare the store-and-forward delay allowed for the uplink information with the delay of performing store-and-forward by the non-terrestrial network device. In a case where the store-and-forward delay allowed for the uplink information is greater than or equal to the delay of performing store-and-forward by the non-terrestrial network device, the non-terrestrial network device may determine to admit storing the uplink information, thereby allowing the first terminal to access the non-terrestrial network device. In a case where the store-and-forward delay allowed for the uplink information is less than the delay of performing store-and-forward by the non-terrestrial network device, the non-terrestrial network device may determine not to admit storing the uplink information, thereby not allowing the first terminal to access the non-terrestrial network device.

In some embodiments, in a case where the non-terrestrial network device admits storing the uplink information sent by the first terminal, the non-terrestrial network device may send first indication information to the first terminal, in which the first indication information is used to indicate that the non-terrestrial network device admits storing the uplink information. In this case, the first terminal sends uplink information to the non-terrestrial network device.

In some embodiments, the first terminal may send the uplink information to the non-terrestrial network device through a control plane (CP). For example, the first terminal may carry the uplink information in an uplink non-access stratum protocol data unit (UL NAS PDU) and send it to the non-terrestrial network device.

In some embodiments, the first terminal may send the uplink information to the non-terrestrial network device through a user plane (UP). For example, the first terminal may carry the uplink information in an uplink user plane (UL UP) bearer and send it to the non-terrestrial network device.

For example, the UL UP bearer may include at least one of the following: a PDU session, a quality of service (QoS) flow, an evolved radio access bearer (E-RAB), or an evolved packet system (EPS) bearer.

In some embodiments, the first indication information is further used to indicate a size of the uplink information that the first terminal is allowed to send. The first terminal may determine, according to the first indication information, the size of the uplink information that the first terminal is allowed to send. As a result, when the first terminal subsequently sends the uplink information, it selects a size of the uplink information that is less than or equal to the size of the uplink information that the first terminal is allowed by the non-terrestrial network device to send, so that the non-terrestrial network device can successfully store the uplink information.

In some embodiments, in a case where the non-terrestrial network device chooses not to admit storing the uplink information sent by the first terminal, the non-terrestrial network device may send second indication information to the first terminal, in which the second indication information is used to indicate that the non-terrestrial network device does not admit storing the uplink information. In this case, the first terminal does not send the uplink information to the non-terrestrial network device. Further, in this case, the first terminal may send the first information to another non-terrestrial network device. That is, when the other non-terrestrial network device admits storing the uplink information, the uplink information is sent to the other non-terrestrial network device.

It should be noted that the first indication information and the second indication information in the above embodiments may be included in an RRC message, or may be included in other information, such as downlink control information (DCI), a medium access control control element (MAC CE), but not limited thereto.

In some embodiments, the second indication information is further used to indicate a cause for the uplink information not being allowed to be stored.

In some embodiments, the cause includes at least one of the following:
a limited storage resource in the non-terrestrial network device; or
a first link between the non-terrestrial network device and a terrestrial network device being unavailable.

In some embodiments, after determining, according to the second indication information, the cause for the uplink information not being allowed to be stored, the first terminal may choose to perform an appropriate subsequent operation based on the cause.

For example, the cause for the uplink information not being allowed to be stored is a limited storage resource in the non-terrestrial network device, the first terminal may choose to send the first information to another non-terrestrial network device. That is, when the other non-terrestrial network device admits storing the uplink information, the first terminal sends the uplink information to the other non-terrestrial network device. For another example, the first terminal may reduce the size of the uplink information to be sent, and resend the first information to the non-terrestrial network device. The storage resource required for the uplink information in the first indication information is also reduced, which helps to ensure that the storage resource in the non-terrestrial network device is sufficient for storing the uplink information, thereby allowing the storage of the uplink information of the first terminal.

For example, the cause for the uplink information not being allowed to be stored is that the first link is unavailable, the first terminal may choose to send the first information to another non-terrestrial network device. That is, when the other non-terrestrial network device admits storing the uplink information, the first terminal sends the uplink information to the other non-terrestrial network device. For another example, the first terminal may wait for a period of time, and send the first information to the non-terrestrial network device. Since the first link may become available after the period of time, this helps to meet the requirement for the non-terrestrial network device to admit storing the uplink information of the first terminal.

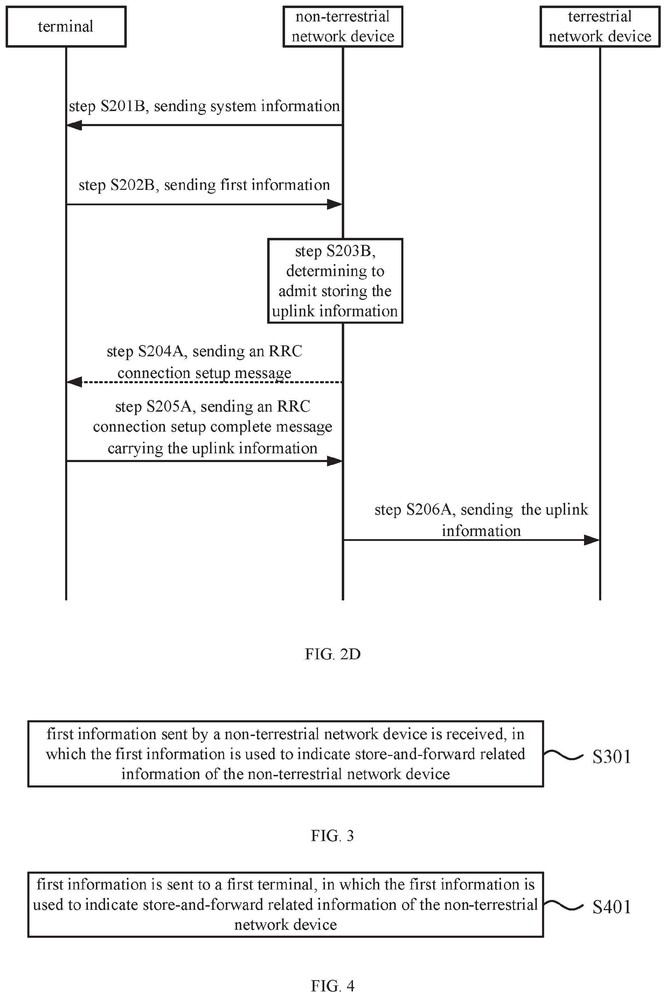

FIG. 2D is a schematic interaction diagram of an information sending method according to an embodiment of the present disclosure.

As shown in FIG. 2D, a case where a terminal is in a non-connected state is taken as an example.

In step S201B, a non-terrestrial network device sends first information, such as system information, to the first terminal, in which the system information is used to indicate whether the non-terrestrial network device supports store-and-forward.

In step S202B, in a case where the first terminal determines that the non-terrestrial network device supports store-and-forward, the first terminal may send first information to the non-terrestrial network device.

For example, the terminal is in a connected state, and the terminal may directly send the first information to the non-terrestrial network device.

For example, the terminal is in a non-connected state, the terminal may first establish or resume an RRC connection, and send the first information to the non-terrestrial network device through the RRC connection. For example, during the RRC connection establishment procedure, the terminal may carry the first information in an RRC connection request and send it to the non-terrestrial network device.

For example, the first information is used to indicate store-and-forward related information of uplink information that the first terminal needs to send to the non-terrestrial network device, and the store-and-forward related information of the non-terrestrial network device includes at least one of the following:
whether the non-terrestrial network device supports store-and-forward;
whether a first link between the non-terrestrial network device and a terrestrial network device is available;
an available time of the first link;
an unavailable time of the first link;
a storage space of the non-terrestrial network device;
information of a terrestrial network device to which the non-terrestrial network device is capable of being connected; or
a delay of performing store-and-forward by the non-terrestrial network device.

In step S203B, the non-terrestrial network device determines, according to the first information, to admit storing the uplink information that the first terminal needs to send. For a specific determination manner, reference may be made to the foregoing embodiments, and thus the description thereof is omitted herein.

In step S204B, the non-terrestrial network device may send first indication information to the terminal, in which the first indication information is used to indicate that the non-terrestrial network device admits storing the uplink information.

Optionally, the first indication information is further used to indicate a size of the uplink information that the first terminal is allowed to send.

For example, the network device may carry the first indication information in an RRC connection setup message sent to the first terminal, to indicate that the non-terrestrial network device admits storing the uplink information that the first terminal needs to send.

In step S205B, after receiving the first indication information, the first terminal may send the uplink information to the non-terrestrial network device.

For example, the first terminal may send the uplink information to the non-terrestrial network device through a user plane or through a control plane, which is not particularly defined in the present disclosure.

For example, the uplink information may be included in a UL NAS PDU and/or a UL UP bearer.

For example, the terminal may be an NB-IoT device or an IoT device, but is not limited thereto.

For example, the terminal may carry the uplink information in an RRC connection setup complete (RRCConnectionSetupComplete) message sent to the non-terrestrial network device, and for example, the uplink information may be carried in a UL NAS PDU.

After receiving the first information, the non-terrestrial network device may store the uplink information.

In step S206B, a first link is available, and the non-terrestrial network device may forward the uplink information to the terrestrial network device through the first link.

The communication method in the embodiments of the present disclosure may include at least one of steps S203 or S204. For example, step S203 may be implemented as an independent embodiment, step S204 may be implemented as an independent embodiment, and steps S203 and S204 may be implemented as an independent embodiment, but is not limited thereto.

In some embodiments, steps S203 and S204 may be performed in a reverse order or simultaneously.

In some embodiments, step S203 is optional, and in different embodiments, one or more of these steps may be omitted or replaced.

In some embodiments, step S204 is optional, and in different embodiments, one or more of these steps may be omitted or replaced.

In some embodiments, reference may be made to other optional implementations described before or after the description corresponding to FIG. 2B.

In a first aspect, an embodiment of the present disclosure provides an information receiving method. FIG. 3 is a schematic flow chart of an information receiving method according to an embodiment of the present disclosure. The information receiving method in this embodiment may be performed by a first terminal.

As shown in FIG. 3, the information receiving method may include the following step S301.

In step S301, first information sent by a non-terrestrial network device is received, in which the first information is used to indicate store-and-forward related information of the non-terrestrial network device.

It should be noted that the embodiment shown in FIG. 3 may be implemented independently or in combination with at least one other embodiment in the present disclosure. The specific implementation may be selected as needed and the present disclosure is not limited thereto.

In some embodiments, the store-and-forward related information of the non-terrestrial network device includes at least one of: whether the non-terrestrial network device supports store-and-forward; whether a first link between the non-terrestrial network device and a terrestrial network device is available; an available time of a first link; an unavailable time of a first link; a storage space of the non-terrestrial network device; information of a terrestrial network device to which the non-terrestrial network device is capable of being connected; or a delay of performing store-and-forward by the non-terrestrial network device.

In some embodiments, the method further includes: determining whether to send uplink information to the non-terrestrial network device according to the store-and-forward related information.

In some embodiments, the method further includes: determining to send uplink information to the non-terrestrial network device and the first terminal being in a non-connected state, in which sending the uplink information to the non-terrestrial network device is performed by: sending the uplink information to the non-terrestrial network device through an early data transmission; or establishing, resuming or reestablishing a radio resource control connection with the non-terrestrial network device, and sending the uplink information to the non-terrestrial network device through the radio resource control connection.

In some embodiments, the method further includes at least one of: receiving first indication information sent by the non-terrestrial network device, wherein the first indication information is used to indicate that the non-terrestrial network device admits storing the uplink information; or receiving second indication information sent by the non-terrestrial network device, wherein the second indication information is used to indicate that the non-terrestrial network device does not admit storing the uplink information.

For the first aspect and optional implementations of optional embodiments of the first aspect, reference may be made to the optional implementations in the embodiments shown in FIG. 2A and other related parts in the embodiments related to FIG. 2A, and thus the description thereof is omitted herein.

In a second aspect, an embodiment of the present disclosure provides an information sending method. FIG. 4 is a schematic flow chart of an information sending method according to an embodiment of the present disclosure. The information sending method in this embodiment may be performed by a network device.

As shown in FIG. 4, the information sending method may include the following step S401.

In step S401, first information is sent to a first terminal, in which the first information is used to indicate store-and-forward related information of the non-terrestrial network device.

It should be noted that the embodiment in FIG. 4 may be implemented independently or in combination with at least one other embodiment in the present disclosure. The specific implementation may be selected as needed, and the present disclosure is not limited thereto.

In some embodiments, the store-and-forward related information of the non-terrestrial network device includes at least one of: whether the non-terrestrial network device supports store-and-forward; whether a first link between the non-terrestrial network device and a terrestrial network device is available; an available time of a first link; an unavailable time of a first link; a storage space of the non-terrestrial network device; information of a terrestrial network device to which the non-terrestrial network device is capable of being connected; or a delay of performing store-and-forward by the non-terrestrial network device.

In some embodiments, the first information is used by the first terminal to determine whether to send uplink information to the non-terrestrial network device.

In some embodiments, the method further includes at least one of: sending first indication information to the first terminal, wherein the first indication information is used to indicate that the non-terrestrial network device admits storing the uplink information; or sending second indication information to the first terminal, wherein the second indication information is used to indicate that the non-terrestrial network device does not admit storing the uplink information.

In some embodiments, the method further includes: determining whether to admit storing the uplink information sent by the first terminal according to at least one of: a cause for the first terminal to send the uplink information to the non-terrestrial network device; a priority of the first terminal; or a priority of the uplink information.

For the second aspect and optional implementations of optional embodiments of the second aspect, reference may be made to the optional implementations in the embodiments shown in FIG. 2A and other related parts in the embodiments related to FIG. 2A, and thus the description thereof is omitted herein.

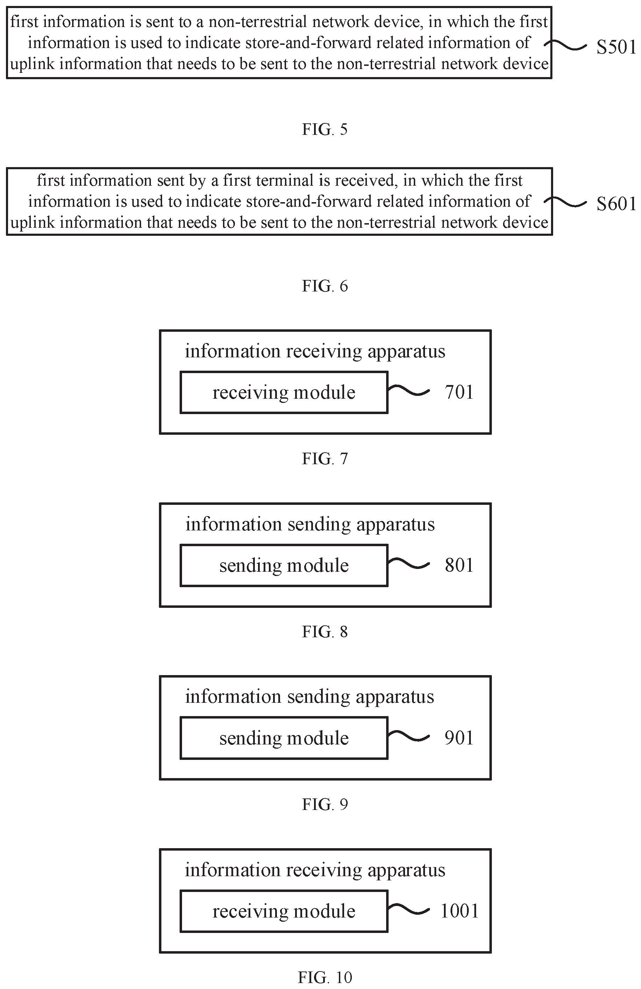

In a third aspect, an embodiment of the present disclosure provides an information sending method. FIG. 5 is a schematic flowchart of an information sending method according to an embodiment of the present disclosure. The information sending method in this embodiment may be performed by a first terminal.

As shown in FIG. 5, the information sending method may include the following step S501.

In step S501, first information is sent to a non-terrestrial network device, in which the first information is used to indicate store-and-forward related information of uplink information that needs to be sent to the non-terrestrial network device.

It should be noted that the embodiment in FIG. 5 may be implemented independently or in combination with at least one other embodiment in the present disclosure. The specific implementation may be selected as needed, and the present disclosure is not limited thereto.

In some embodiments, the store-and-forward related information of the uplink information includes at least one of: whether the uplink information requires store-and-forward; a storage resource required for the uplink information; or a store-and-forward delay allowed for the uplink information.

In some embodiments, the first information is used for the non-terrestrial network device to determine whether to admit storing the uplink information.

In some embodiments, the method further includes at least one of: receiving first indication information sent by the non-terrestrial network device, wherein the first indication information is used to indicate that the non-terrestrial network device admits storing the uplink information; or receiving second indication information sent by the non-terrestrial network device, wherein the second indication information is used to indicate that the non-terrestrial network device does not admit storing the uplink information.

In some embodiments, the first indication information is further used to indicate a size of the uplink information that the first terminal is allowed to send.

In some embodiments, the second indication information is further used to indicate a cause for the uplink information not being allowed to be stored.

In some embodiments, the cause comprises at least one of: a limited storage resource in the non-terrestrial network device; or a first link between the non-terrestrial network device and a terrestrial network device being unavailable.

For the third aspect and optional implementations of optional embodiments of the third aspect, reference may be made to the optional implementations in the embodiments shown in FIG. 2B and other related parts in the embodiments related to FIG. 2B, and thus the description thereof is omitted herein.

In a fourth aspect, an embodiment of the present disclosure provides an information receiving method. FIG. 6 is a schematic flow chart of an information receiving method according to an embodiment of the present disclosure. The information receiving method in this embodiment may be performed by a network device.

As shown in FIG. 6, the information receiving method may include the following step S601.

In step S601, first information sent by a first terminal is received, in which the first information is used to indicate store-and-forward related information of uplink information that needs to be sent to the non-terrestrial network device.

It should be noted that the embodiment in FIG. 6 may be implemented independently or in combination with at least one other embodiment in the present disclosure. The specific implementation may be selected as needed, and the present disclosure is not limited thereto.

In some embodiments, the store-and-forward related information of the uplink information includes at least one of: whether the uplink information requires store-and-forward; a storage resource required for the uplink information; or a store-and-forward delay allowed for the uplink information.

In some embodiments, the method further includes: determining whether to admit storing the uplink information according to the first information.

In some embodiments, the method further includes at least one of: sending first indication information to the first terminal, wherein the first indication information is used to indicate that the non-terrestrial network device admits storing the uplink information; or sending second indication information to the first terminal, wherein the second indication information is used to indicate that the non-terrestrial network device does not admit storing the uplink information.

In some embodiments, the first indication information is further used to indicate a size of the uplink information that the first terminal is allowed to send.

In some embodiments, the second indication information is further used to indicate a cause for the uplink information not being allowed to be stored.

In some embodiments, the cause comprises at least one of: a limited storage resource in the non-terrestrial network device; or a first link between the non-terrestrial network device and a terrestrial network device being unavailable.

For the fourth aspect and optional implementations of optional embodiments of the fourth aspect, reference may be made to the optional implementations in the embodiments shown in FIG. 2B and other related parts in the embodiments related to FIG. 2B, and thus the description thereof is omitted herein.

In some embodiments, names of information and the like are not limited to the names described in embodiments. Terms such as "information", "message", "signal", "signaling", "report", "configuration", "indication", "instruction", "command", "channel", "parameter", "field", "symbol", "codebook", "codeword", "codepoint", "bit", "data", "program", "chip" may be used interchangeably.

In some embodiments, terms such as "uplink", "uplink link", "physical uplink" can be used interchangeably. Terms such as "downlink", "downlink link", "physical downlink" can be used interchangeably. Terms such as "side", "sidelink", "side communication", "sidelink communication", "direct connection", "direct link", "direct communication", "direct link communication" can be used interchangeably.

In some embodiments, terms such as "downlink control information (DCI)", "downlink (DL) assignment", "DL DCI", "uplink (UL) grant", "UL DCI" may be used interchangeably.

In some embodiments, terms such as "physical downlink shared channel (PDSCH)" and "DL data" may be used interchangeably, and terms such as "physical uplink shared channel (PUSCH)" and "UL data" may be used interchangeably.

In some embodiments, terms such as "acquire", "obtain", "get", "receive", "transmit", "bidirectional transmission", "send and/or receive" may be used interchangeably, and these terms may be interpreted as having multiple meanings including receiving from another entity, obtaining from a protocol, obtaining from a higher layer, obtaining from a self-processing, implementing autonomously and the like.

In some embodiments, terms such as "send", "transmit", "report", "deliver", "transmit", "bidirectional transmission", "send and/or receive" may be used interchangeably.

In some embodiments, the determination or judgment may be performed using a value represented by 1 bit (0 or 1), or using a boolean value represented by true or false, or by numerical comparison (e.g., comparison with a predetermined value), but not limited thereto.

In some embodiments, "does not expect to receive" may be interpreted as not receiving on a time-domain resource and/or a frequency-domain resource, or as not performing subsequent processing on received data after receiving the data; and "does not expect to send" may be interpreted as not sending, or as sending but not expecting a receiver to respond to content that is sent.

Corresponding to the foregoing embodiments of the information receiving method and the information sending method, the present disclosure further provides embodiments of an information receiving apparatus and an information sending apparatus.

FIG. 7 is a schematic block diagram of an information receiving apparatus according to an embodiment of the present disclosure. As shown in FIG. 7, the information receiving apparatus includes a receiving module 701.

In some embodiments, the information receiving device is provided in a first terminal.

In some embodiments, the receiving module is configured to receive first information sent by a non-terrestrial network device, in which the first information is used to indicate store-and-forward related information of the non-terrestrial network device.

In some embodiments, the store-and-forward related information of the non-terrestrial network device includes at least one of: whether the non-terrestrial network device supports store-and-forward; whether a first link between the non-terrestrial network device and a terrestrial network device is available; an available time of a first link; an unavailable time of a first link; a storage space of the non-terrestrial network device; information of a terrestrial network device to which the non-terrestrial network device is capable of being connected; or a delay of performing store-and-forward by the non-terrestrial network device.

In some embodiments, the apparatus further includes: a processing module configured to determine whether to send uplink information to the non-terrestrial network device according to the store-and-forward related information.

In some embodiments, the apparatus further includes: a sending module configured to determine to send uplink information to the non-terrestrial network device and the first terminal being in a non-connected state, in which sending the uplink information to the non-terrestrial network device is performed by: sending the uplink information to the non-terrestrial network device through an early data transmission; or establishing, resuming or reestablishing a radio resource control connection with the non-terrestrial network device, and sending the uplink information to the non-terrestrial network device through the radio resource control connection.

In some embodiments, the receiving module is further configured to perform at least one of the following: receiving first indication information sent by the non-terrestrial network device, in which the first indication information is used to indicate that the non-terrestrial network device admits storing the uplink information; or receiving second indication information sent by the non-terrestrial network device, in which the second indication information is used to indicate that the non-terrestrial network device does not admit storing the uplink information.

In some embodiments, the uplink information is sent through a control plane, or the uplink information is sent through a user plane.

FIG. 8 is a schematic block diagram of an information sending apparatus according to an embodiment of the present disclosure. As shown in FIG. 8, the information sending apparatus includes a sending module 801.

In some embodiments, the information sending apparatus is provided in a non-terrestrial network device.

In some embodiments, the sending module is configured to send first information to a first terminal, in which the first information is used to indicate store-and-forward related information of the non-terrestrial network device.

In some embodiments, the store-and-forward related information of the non-terrestrial network device includes at least one of: whether the non-terrestrial network device supports store-and-forward; whether a first link between the non-terrestrial network device and a terrestrial network device is available; an available time of a first link; an unavailable time of a first link; a storage space of the non-terrestrial network device; information of a terrestrial network device to which the non-terrestrial network device is capable of being connected; or a delay of performing store-and-forward by the non-terrestrial network device.

In some embodiments, the first information is used by the first terminal to determine whether to send uplink information to the non-terrestrial network device.

In some embodiments, the sending module is further configured to perform at least one of: sending first indication information to the first terminal, wherein the first indication information is used to indicate that the non-terrestrial network device admits storing the uplink information; or sending second indication information to the first terminal, wherein the second indication information is used to indicate that the non-terrestrial network device does not admit storing the uplink information.

In some embodiments, the apparatus further includes: a processing module configured to determine whether to admit storing the uplink information sent by the first terminal according to at least one of: a cause for the first terminal to send the uplink information to the non-terrestrial network device; a priority of the first terminal; or a priority of the uplink information.

In some embodiments, the uplink information is sent through a control plane, or the uplink information is sent through a user plane.

FIG. 9 is a schematic block diagram of an information sending apparatus according to an embodiment of the present disclosure. As shown in FIG. 9, the information sending apparatus includes a sending module 901.

In some embodiments, the information sending apparatus is provided in a first terminal.

The sending module is configured to send first information to a non-terrestrial network device, in which the first information is used to indicate store-and-forward related information of uplink information that needs to be sent to the non-terrestrial network device.

In some embodiments, the store-and-forward related information of the uplink information includes at least one of: whether the uplink information requires store-and-forward; a storage resource required for the uplink information; or a store-and-forward delay allowed for the uplink information.

In some embodiments, the first information is used for the non-terrestrial network device to determine whether to admit storing the uplink information.

In some embodiments, the apparatus further includes a receiving module configured to perform at least one of: receiving first indication information sent by the non-terrestrial network device, wherein the first indication information is used to indicate that the non-terrestrial network device admits storing the uplink information; or receiving second indication information sent by the non-terrestrial network device, wherein the second indication information is used to indicate that the non-terrestrial network device does not admit storing the uplink information.

In some embodiments, the first indication information is further used to indicate a size of the uplink information that the first terminal is allowed to send.

In some embodiments, the second indication information is further used to indicate a cause for the uplink information not being allowed to be stored.

In some embodiments, the cause comprises at least one of: a limited storage resource in the non-terrestrial network device; or a first link between the non-terrestrial network device and a terrestrial network device being unavailable.

FIG. 10 is a schematic block diagram of an information receiving apparatus according to an embodiment of the present disclosure. As shown in FIG. 10, the information receiving apparatus includes a receiving module 1001.

In some embodiments, the information receiving device may be provided in a non-terrestrial network device.

In some embodiments, the receiving module is configured to receive first information sent by a first terminal, in which the first information is used to indicate store-and-forward related information of uplink information that needs to be sent to the non-terrestrial network device.

In some embodiments, the store-and-forward related information of the uplink information includes at least one of: whether the uplink information requires store-and-forward; a storage resource required for the uplink information; or a store-and-forward delay allowed for the uplink information.

In some embodiments, the apparatus further includes: a processing module configured to determine whether to admit storing the uplink information according to the first information.

In some embodiments, the apparatus is further configured to perform at least one of: sending first indication information to the first terminal, wherein the first indication information is used to indicate that the non-terrestrial network device admits storing the uplink information; or sending second indication information to the first terminal, wherein the second indication information is used to indicate that the non-terrestrial network device does not admit storing the uplink information.

In some embodiments, the first indication information is further used to indicate a size of the uplink information that the first terminal is allowed to send.

In some embodiments, the second indication information is further used to indicate a cause for the uplink information not being allowed to be stored.

In some embodiments, the cause comprises at least one of: a limited storage resource in the non-terrestrial network device; or a first link between the non-terrestrial network device and a terrestrial network device being unavailable.

Since the apparatus embodiments substantially correspond to the method embodiments, reference is made to the corresponding description of the method embodiments. The above-described apparatus embodiments are merely for the purpose of illustration, in which the modules described as separate components may be or may not be physically separated, and the components displayed as modules may be or may not be physical modules, that is, either located at one place or distributed onto a plurality of network modules. The object of embodiments of the present disclosure may be achieved by some or all of the modules in accordance with practical requirements. It would be appreciated and executable by those skilled in the art without creative efforts.

Embodiments of the present disclosure also provide an apparatus for implementing any of the above methods, for example, an apparatus including units or modules for implementing the steps performed by the terminal in any of the above methods. For another example, another apparatus is also provided, which includes units or modules for implementing the steps performed by the network device (such as an access network device, a core network function node, a core network device and the like) in any of the above methods.

It should be understood that the division of units or modules in the above apparatus is only a division of logical functions, which may be fully or partially integrated into a physical entity or physically separated in actual implementation. Moreover, the units or modules in the apparatus may be implemented in the form of calling software by a processor: for example, the apparatus includes a processor, which is connected with a memory, and instructions are stored in the memory, and the processor calls the instructions stored in the memory to implement any of the above methods or implement the functions of the units or modules of the apparatus, in which the processor is a general-purpose processor, such as a central processing unit (CPU) or a microprocessor, and the memory is a memory in the apparatus or a memory outside the apparatus. Alternatively, the units or modules in the apparatus may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above apparatus may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

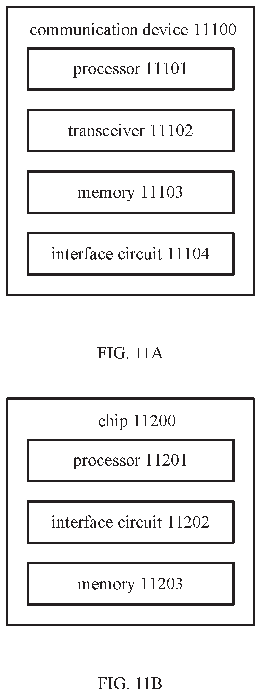

FIG. 11A is a block diagram illustrating a communication device 11100 according to embodiments of the present disclosure. The communication device 11100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 11100 may be used to implement the method described in the above-mentioned method embodiments, for details, reference may be made to the description in the above-mentioned method embodiments.

As shown in FIG. 11A, the communication device 11100 includes one or more processors 11101. The processor 11101 may be a general-purpose processor or a special-purpose processor, for example, a baseband processor or a central processor. The baseband processor may be used to process communication protocols and communication data, and the central processor may be used to control the communication device (such as a base station, a baseband chip, a terminal, a terminal chips, a DU or a CU, etc.), execute programs, and process program data. Optionally, the communication device 11100 is configured to perform any of the above methods. Optionally, one or more processors 11101 are configured to invoke instructions to cause the communication device 11100 to perform any of the above methods.

In some embodiments, the communication device 11100 further includes one or more transceivers 11102. In a case where the communication device 11100 includes one or more transceivers 11102, communication steps (for example, step S201, step S202, step S203 and step S204, but not limited thereto) such as sending and receiving in the above methods are performed by the transceiver 11102, and at least one of other steps (for example, step S201, step S202, step S203 and step S204, but not limited thereto) is performed by the processor 11101. In an optional embodiment, the transceiver may include a receiver and/or a transmitter, which may be separate or integrated. Optionally, terms such as transceiver, transceiver unit, transceiving machine, transceiver circuit, interface circuit, interface and the like may be used interchangeably, and terms such as transmitter, transmitting unit, transmitting machine, transmitting circuit and the like may be used interchangeably, and terms such as receiver, receiving unit, receiving machine, receiving circuit and the like may be used interchangeably.

In some embodiments, the communication device 11100 further includes one or more memories 11103 for storing data. Optionally, all or part of the memories 11103 may also be located outside the communication device 11100. In an optional embodiment, the communication device 11100 may include one or more interface circuits 11104. Optionally, the interface circuit 11104 is connected to the memory 11103. The interface circuit 11104 may be used to receive data from the memory 11103 or other devices, and may be used to send data to the memory 11103 or other devices. For example, the interface circuit 11104 may read the data stored in the memory 11103 and send the data to the processor 11101.

The communication device 11100 described in the above embodiments may be a network device or a terminal device, but the scope of the communication device 11100 described in the present disclosure is not limited thereto. The structure of the communication device 11100 may not be limited by FIG. 11A. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 11B is a block diagram illustrating a chip 11200 according to embodiments of the present disclosure. For the case where the communication device 11100 is a chip or a chip system, reference may be made to the block diagram of the chip 11200 shown in FIG. 11B, but the communication device 11100 is not limited thereto.

The chip 11200 includes one or more processors 11201, and the chip 11200 is configured to perform any of the above methods.

In some embodiments, the chip 11200 further includes one or more interface circuits 11202. Optionally, terms such as interface circuit, interface, transceiver pin and the like may be used interchangeably. In some embodiments, the chip 11200 further includes one or more memories 11203 for storing data. Optionally, all or part of the memories 11203 may be outside the chip 11200. Optionally, the interface circuit 11202 is connected to the memory 11203. The interface circuit 11202 may be configured to receive data from the memory 11203 or other devices, and the interface circuit 11202 may be configured to send data to the memory 11203 or other devices. For example, the interface circuit 11202 may read data stored in the memory 11203, and send the data to the processor 11201.

In some embodiments, the interface circuit 11202 is configured to perform at least one of communication steps such as sending and/or receiving in the above method (for example, step S201, step S202, step S203 and step S204, but not limited thereto). The interface circuit 11202 performing communication steps such as sending and/or receiving in the above method refers to: the interface circuit 11202 performs data interaction between the processor 11201, the chip 11200, the memory 11203, or the transceiver device. In some embodiments, the processor 11201 is configured to perform at least one of other steps (for example, step S201, step S202, step S203 and step S204, but not limited thereto).

The modules and devices described in the various embodiments of virtual apparatuses, physical apparatuses, chips, and the like may be arbitrarily combined or separated as needed. Optionally, some or all steps may also be performed collaboratively by multiple modules and/or devices, which is not limited in embodiments of the present disclosure.

The present disclosure further provides a storage medium having stored thereon instructions, which, when executed on the communication device 11100, cause the communication device 11100 to perform any of the above methods. Optionally, the storage medium is an electronic storage medium. Optionally, the storage medium is a computer-readable storage medium, but not limited thereto, and it may also be a storage medium readable by other devices. Optionally, the storage medium may be a non-transitory storage medium, but not limited thereto, and it may also be a transitory storage medium.

The present disclosure further provides a program product which, when executed by the communication device 11100, causes the communication device 11100 to perform any of the above methods. Optionally, the program product is a computer program product.

The present disclosure further provides a computer program that, when run on a computer, causes the computer to perform any of the above methods.

## Claims

1. An information receiving method, performed by a first terminal, comprising:
receiving first information sent by a non-terrestrial network device, wherein the first information is used to indicate store-and-forward related information of the non-terrestrial network device.

2. The method according to claim 1, wherein the store-and-forward related information of the non-terrestrial network device comprises at least one of:
whether the non-terrestrial network device supports store-and-forward;
whether a first link between the non-terrestrial network device and a terrestrial network device is available;
an available time of a first link;
an unavailable time of a first link;
a storage space of the non-terrestrial network device;
information of a terrestrial network device to which the non-terrestrial network device is capable of being connected; or
a delay of performing store-and-forward by the non-terrestrial network device.

3. The method according to claim 1 or 2, further comprising:
determining whether to send uplink information to the non-terrestrial network device according to the store-and-forward related information.

4. The method according to claim 3, further comprising:
determining to send uplink information to the non-terrestrial network device and the first terminal being in a non-connected state, wherein sending the uplink information to the non-terrestrial network device is performed by:
sending the uplink information to the non-terrestrial network device through an early data transmission; or
establishing, resuming or reestablishing a radio resource control connection with the non-terrestrial network device, and sending the uplink information to the non-terrestrial network device through the radio resource control connection.

5. The method according to claim 3 or 4, further comprising at least one of:
receiving first indication information sent by the non-terrestrial network device, wherein the first indication information is used to indicate that the non-terrestrial network device admits storing the uplink information; or
receiving second indication information sent by the non-terrestrial network device, wherein the second indication information is used to indicate that the non-terrestrial network device does not admit storing the uplink information.

6. An information sending method, performed by a non-terrestrial network device, comprising:
sending first information to a first terminal, wherein the first information is used to indicate store-and-forward related information of the non-terrestrial network device.

7. The method according to claim 6, wherein the store-and-forward related information of the non-terrestrial network device comprises at least one of:
whether the non-terrestrial network device supports store-and-forward;
whether a first link between the non-terrestrial network device and a terrestrial network device is available;
an available time of a first link;
an unavailable time of a first link;
a storage space of the non-terrestrial network device;
information of a terrestrial network device to which the non-terrestrial network device is capable of being connected; or
a delay of performing store-and-forward by the non-terrestrial network device.

8. The method according to claim 6 or 7, wherein the first information is used by the first terminal to determine whether to send uplink information to the non-terrestrial network device.

9. The method according to any one of claims 6 to 8, further comprising at least one of:
sending first indication information to the first terminal, wherein the first indication information is used to indicate that the non-terrestrial network device admits storing the uplink information; or
sending second indication information to the first terminal, wherein the second indication information is used to indicate that the non-terrestrial network device does not admit storing the uplink information.

10. The method according to any one of claims 6 to 9, further comprising:
determining whether to admit storing the uplink information sent by the first terminal according to at least one of:
a cause for the first terminal to send the uplink information to the non-terrestrial network device;
a priority of the first terminal; or
a priority of the uplink information.

11. An information sending method, performed by a first terminal, comprising:
sending first information to a non-terrestrial network device, wherein the first information is used to indicate store-and-forward related information of uplink information that needs to be sent to the non-terrestrial network device.

12. The method according to claim 11, wherein the store-and-forward related information of the uplink information comprises at least one of:
whether the uplink information requires store-and-forward;
a storage resource required for the uplink information; or
a store-and-forward delay allowed for the uplink information.

13. The method according to claim 11 or 12, wherein the first information is used for the non-terrestrial network device to determine whether to admit storing the uplink information.

14. The method according to any one of claims 11 to 13, further comprising at least one of:
receiving first indication information sent by the non-terrestrial network device, wherein the first indication information is used to indicate that the non-terrestrial network device admits storing the uplink information; or
receiving second indication information sent by the non-terrestrial network device, wherein the second indication information is used to indicate that the non-terrestrial network device does not admit storing the uplink information.

15. The method according to claim 14, wherein the first indication information is further used to indicate a size of the uplink information that the first terminal is allowed to send.

16. The method according to claim 14, wherein the second indication information is further used to indicate a cause for the uplink information not being allowed to be stored.

17. The method according to claim 16, wherein the cause comprises at least one of:
a limited storage resource in the non-terrestrial network device; or
a first link between the non-terrestrial network device and a terrestrial network device being unavailable.

18. An information receiving method, performed by a non-terrestrial network device, the method comprising:
receiving first information sent by a first terminal, wherein the first information is used to indicate store-and-forward related information of uplink information that needs to be sent to the non-terrestrial network device.

19. The method according to claim 18, wherein the store-and-forward related information of the uplink information comprises at least one of:
whether the uplink information requires store-and-forward;
a storage resource required for the uplink information; or
a store-and-forward delay allowed for the uplink information.

20. The method according to claim 18 or 19, further comprising:
determining whether to admit storing the uplink information according to the first information.

21. The method according to any one of claims 18 to 20, further comprising at least one of:
sending first indication information to the first terminal, wherein the first indication information is used to indicate that the non-terrestrial network device admits storing the uplink information; or
sending second indication information to the first terminal, wherein the second indication information is used to indicate that the non-terrestrial network device does not admit storing the uplink information.

22. The method according to claim 21, wherein the first indication information is further used to indicate a size of the uplink information that the first terminal is allowed to send.

23. The method according to claim 21, wherein the second indication information is further used to indicate a cause for the uplink information not being allowed to be stored.

24. The method according to claim 23, wherein the cause comprises at least one of:
a limited storage resource in the non-terrestrial network device; or
a first link between the non-terrestrial network device and a terrestrial network device being unavailable.

25. An information receiving apparatus, provided in a first terminal, comprising:
a receiving module, configured to receive first information sent by a non-terrestrial network device, wherein the first information is used to indicate store-and-forward related information of the non-terrestrial network device.

26. An information sending apparatus, provided in a non-terrestrial network device, comprising:
a sending module, configured to send first information to a first terminal, wherein the first information is used to indicate store-and-forward related information of the non-terrestrial network device.

27. An information sending apparatus, provided in a first terminal, comprising:
a sending module, configured to send first information to a non-terrestrial network device, wherein the first information is used to indicate store-and-forward related information of uplink information that needs to be sent to the non-terrestrial network device.

28. An information receiving apparatus, provided in a non-terrestrial network device, comprising:
a receiving module, configured to receive first information sent by a first terminal, wherein the first information is used to indicate store-and-forward related information of uplink information that needs to be sent to the non-terrestrial network device.

29. A terminal, comprising:
one or more processors;
wherein the terminal is configured to perform the information receiving method according to any one of claims 1 to 5, and/or the information sending method according to any one of claims 11 to 17.

30. A network device, comprising:
one or more processors;
wherein the network device is configured to perform the information sending method according to any one of claims 6 to 10, and/or the information receiving method according to any one of claims 18 to 24.

31. A communication system, comprising a terminal and a network device, wherein the terminal is configured to implement the information receiving method according to any one of claims 1 to 5, and/or the information sending method according to any one of claims 11 to 17, and the network device is configured to implement the information sending method according to any one of claims 6 to 10, and/or the information receiving method according to any one of claims 18 to 24.

32. A storage medium having instructions stored thereon, wherein the instructions, when executed on a communication device, cause the communication device to perform:
the information receiving method according to any one of claims 1 to 5, and/or the information sending method according to any one of claims 11 to 17, and/or
the information sending method according to any one of claims 6 to 10, and/or the information receiving method according to any one of claims 18 to 24.
